# EUROPÄISCHE PATENTSCHRIFT

(11) **EP 4 128 020 B1**
(45) Veröffentlichungstag und Bekanntmachung des Hinweises auf die Patenterteilung: **06.05.2026**
(21) Anmeldenummer: 21715165.3
(22) Anmeldetag: 22.03.2021
(51) Int. Cl.: G01S 7/48, G01S 17/931, G06V 20/56, G01S 7/487

(54) **OBJEKTERKENNUNG DURCH EIN AKTIVES OPTISCHES SENSORSYSTEM**
OBJECT DETECTION THROUGH AN ACTIVE OPTICAL SENSOR SYSTEM
DÉTECTION D'OBJETS PAR UN SYSTÈME DE CAPTEURS OPTIQUES ACTIFS

(30) Priorität: 27.03.2020 DE 102020108473
(43) Veröffentlichungstag der Anmeldung: 08.02.2023
(73) Patentinhaber: Valeo Schalter und Sensoren GmbH, 74321 Bietigheim-Bissingen (DE)
(72) Erfinder: FERNANDEZ, Sergio, 74321 Bietigheim-Bissingen (DE); PFRANG, Christoph, 74321 Bietigheim-Bissingen (DE); TRUSOV, Viktor, 74321 Bietigheim-Bissingen (DE); BASSIOUNY, Ali, 74321 Bietigheim-Bissingen (DE)
(74) Vertreter: Pothmann, Karsten
(86) Internationale Anmeldenummer: PCT/EP2021/057177
(87) Internationale Veröffentlichungsnummer: WO 2021/191102

(56) Entgegenhaltungen:
- EP-A1- 1 557 694
- EP-B1- 1 557 694
- US-A1- 2004 257 556

## Beschreibung

Die Erfindung wird durch die angehängten Ansprüche definiert. Die vorliegende Erfindung betrifft ein Verfahren zur Objekterkennung durch ein aktives optisches Sensorsystem, wobei mittels einer Detektoreinheit des Sensorsystems und einem Objekt in einer Umgebung des Sensorsystems reflektiertes Licht erfasst wird und basierend auf dem erfassten Licht ein Sensorsignal erzeugt wird und mittels einer Recheneinheit eine erste Pulsweite eines Signalpulses des Sensorsignals bestimmt wird, wobei die erste Pulsweite durch einen vorgegebenen ersten Grenzwert für eine Amplitude des Sensorsignals festgelegt ist. Die Erfindung betrifft ferner ein Verfahren zur wenigstens teilweise automatischen Steuerung eines Kraftfahrzeugs, ein aktives optisches Sensorsystem, ein elektronisches Fahrzeugführungssystem für ein Kraftfahrzeug, Computerprogramme sowie ein computerlesbares Speichermedium.

Aktive optische Sensorsysteme, wie beispielsweise Lidarsysteme, können an Kraftfahrzeugen montiert werden, um vielfältige Funktionen elektronischer Fahrzeugführungssysteme oder Fahrerassistenzsysteme zu realisieren. Diese Funktionen beinhalten Abstandsmessungen, Abstandsregelalgorithmen, Spurhalteassistenten, Objektverfolgungsfunktionen, Objekterkennungsfunktionen, Objektklassifizierungsfunktionen und so weiter.

Das detektierte Licht führt dabei zu einem analogen Signalpuls mit einem zeitlichen Verlauf, der die Intensität des detektierten Lichts widergibt. Um diese Information in einer diskreten Weise darzustellen, kann der Signalpuls beispielsweise durch eine bestimmte Pulsweite beschrieben werden, die durch diejenige Zeit definiert ist, der der Puls oberhalb eines bestimmten Grenzwerts liegt.

Die Wahl des Grenzwerts zur Bestimmung der Pulsweite hat dabei im Allgemeinen einen Einfluss auf verschiedene qualitative Aspekte der resultierenden Punktwolke. Je größer der Grenzwert gewählt wird, desto geringer ist die Empfindlichkeit beziehungsweise die effektive Reichweite des aktiven optischen Sensorsystems, da mit steigendem Abstand von dem Sensorsystem die typische maximale Amplitude des Sensorsignals immer kleiner wird. Wird der Grenzwert also zu hoch gewählt, so werden tendenziell nur Objekte in der Punktwolke widergegeben, die sich relativ nahe an dem Sensorsystem befinden. Auf der anderen Seite wird der Einfluss von Rauscheffekten umso stärker, je kleiner der Grenzwert gewählt wird. Bei sehr kleinen Grenzwerten führen potentiell auch solche Signalpulse zu Einträgen in der Punktwolke, die nicht Reflexionen von realen Objekten in der Umgebung des Sensorsystems entsprechen.

Im Dokument EP 1 557 694 B1 wird ein Verfahren zur Klassifizierung von Objekten beschrieben. Dabei wird die Umgebung eines Kraftfahrzeugs mit einem Laserscanner abgetastet und die Echopulsbreite des empfangenen reflektierten Lichtpulses wird ausgewertet. Es wird ein Schwellwert definiert, den der Lichtpuls überschreiten muss und der zeitliche Abstand zwischen Überschreiten des Schwellwerts bis zum darauffolgenden Unterschreiten des Schwellwerts wird als Echopulsbreite des Lichtpulses definiert.

In US 2004/257556 A1 (SAMUKAWA YOSHIE [JP] ET AL) 23. Dezember 2004 (2004-12-23) wird die Erstellung einer Punktewolke beschrieben, wobei Punkte von verfolgten Objekten in die Punktewolke eingetragen werden.

Vor diesem Hintergrund ist es eine Aufgabe der vorliegenden Erfindung, ein verbessertes Konzept zur Objekterkennung durch ein aktives optisches Sensorsystem anzugeben, durch das der Einfluss von Rauscheffekten verringert werden kann oder gering gehalten kann, wobei gleichzeitig die Empfindlichkeit des Sensorsystem vergrößert oder gleich groß gehalten werden kann.

Erfindungsgemäß wird diese Aufgabe gelöst durch den jeweiligen Gegenstand der unabhängigen Patentansprüche. Vorteilhafte Weiterbildungen und weitere Ausgestaltungen sind Gegenstand der abhängigen Ansprüche.

Das verbesserte Konzept beruht auf der Idee, eine Hybridpunktwolke zu erzeugen, indem für jeden Signalpuls eine von wenigstens zwei Kategorien identifiziert wird und abhängig von der Kategorie ein Eintrag für den Signalpuls in der Punktwolke erzeugt wird, der entweder einer ersten Pulsweite oder einer zweiten Pulsweite des Signalpulses entspricht, wobei die unterschiedlichen Pulsweiten unterschiedlichen Grenzwerten für die Amplitude des Sensorsignals entsprechen.

Gemäß dem verbesserten Konzept wird ein Verfahren zur Objekterkennung durch ein aktives optisches Sensorsystem, insbesondere ein aktives optisches Sensorsystem eines Kraftfahrzeugs oder für ein Kraftfahrzeug, angegeben. Mittels einer Detektoreinheit des Sensorsystems wird von einem Objekt in einer Umgebung des Sensorsystems reflektiertes Licht erfasst und basierend auf dem erfassten Licht wird mittels der Detektoreinheit ein Sensorsignal erzeugt. Mittels einer Recheneinheit, insbesondere des Sensorsystems oder des Kraftfahrzeugs, wird eine erste Pulsweite eines Signalpulses des Sensorsignals bestimmt, wobei die erste Pulsweite durch einen vorgegebenen ersten Grenzwert für eine Amplitude des Sensorsignals festgelegt ist. Eine zweite Pulsweite des Signalpulses wird mittels der Recheneinheit bestimmt, wobei die zweite Pulsweite durch einen vorgegebenen zweiten Grenzwert, der insbesondere verschieden ist von dem ersten Grenzwert, für die Amplitude des Sensorsignals festgelegt ist. Mittels der Recheneinheit wird der Signalpuls abhängig von wenigstens einem vordefinierten Parameter des Signalpulses einer, insbesondere genau einer, von wenigstens zwei vorgegebenen Kategorien zugeordnet. Mittels der Recheneinheit wird eine Punktwolke zur Objekterkennung erzeugt, die für den Signalpuls genau einen Eintrag enthält. Abhängig von der Kategorie des Signalpulses, also von der Kategorie, der der Signalpuls zugeordnet wurde, entspricht der Eintrag entweder der ersten Pulsweite oder der zweiten Pulsweite.

Hier und im Folgenden kann ein aktives optisches Sensorsystem dadurch als solches definiert sein, dass es eine Emittereinheit mit einer Lichtquelle aufweist, insbesondere zum Aussenden des Lichts, beispielsweise in Form von Lichtpulsen. Die Lichtquelle kann insbesondere als Laser ausgestaltet sein. Des Weiteren weist ein aktives Sensorsystem die Detektoreinheit mit mindestens einem optischen Detektor auf, insbesondere zum Erfassen von Licht oder von Lichtpulsen, insbesondere reflektierter Anteile des ausgesendeten Lichts.

Hier und im Folgenden kann der Begriff "Licht" derart verstanden werden, dass davon elektromagnetische Wellen im sichtbaren Bereich, im Infrarotbereich und/oder im ultravioletten Bereich umfasst sind. Dementsprechend kann auch der Begriff "optisch" derart verstanden werden, dass er sich auf Licht nach diesem Verständnis bezieht.

Das Licht, welches von dem aktiven optischen Sensorsystem ausgesendet wird, kann insbesondere infrarotes Licht, beispielsweise mit einer Wellenlänge von 905 nm, ungefähr 905 nm, 1.200 nm oder ungefähr 1.200 nm beinhalten. Diese Wellenlängenangaben können sich dabei jeweils auf einen Wellenlängenbereich mit einer breiteren Verteilung beziehen, wie sie für die entsprechende Lichtquelle typisch ist.

Im vorliegenden Fall des aktiven optischen Sensorsystems kann es sich bei der Lichtquelle beispielsweise um eine Laserlichtquelle handeln. Die genannten Wellenlängen können, im Rahmen üblicher Toleranzen, beispielsweise Peakwellenlängen des Laserspektrums entsprechen.

Insbesondere wird mittels einer Emittereinheit des Sensorsystems Licht in Richtung des Objekts emittiert und bei dem reflektierten erfassten Licht handelt es sich um von dem Objekt reflektierte Anteile des emittierten Lichts.

Unter der Punktwolke kann beispielsweise eine Menge von Datenpunkten mit einer Vielzahl von Einträgen verstanden werden, wobei jeder Eintrag einem entsprechenden Signalpuls eines Sensorsignals, das durch die Detektoreinheit erzeugt wurde, entspricht. Verschiedene Einträge können dabei von demselben Sensorsignal stammen, wenn das Sensorsignal mehrere Signalpulse, die auch als Echos bezeichnet werden, enthält. Jeder Eintrag ist aber genau einem Signalpuls zugeordnet.

Jeder Eintrag kann beispielsweise für den entsprechenden Signalpuls eine Mehrzahl von Parametern oder Eigenschaften oder sonstigen Informationen beinhalten. Beispielsweise kann ein Eintrag Koordinaten in zwei oder drei Dimensionen für einen entsprechenden Punkt in der Umgebung des Sensorsystems beinhalten, von dem das Licht entsprechend reflektiert wurde und nach der Erfassung durch die Detektoreinheit zu dem entsprechenden Signalpuls geführt hat. Die Koordinaten können beispielsweise in Form von Polarkoordinaten oder kartesischen Koordinaten vorliegen. Der Eintrag kann beispielsweise auch eine Echonummer des entsprechenden Signalpulses beinhalten. Die Echonummer entspricht dann beispielsweise einer entsprechenden Position des Signalpulses in einer Reihe aufeinanderfolgender Signalpulse desselben Sensorsignals.

Zudem kann der Eintrag grundsätzlich Informationen bezüglich einer Pulsweite oder einer maximalen Signalamplitude des Signalpulses beinhalten. Nach dem verbesserten Konzept enthält jeder Eintrag der Punktwolke jedoch genau die Pulsweite betreffenden Wert, nämlich entweder einen Wert für die erste Pulsweite oder einen Wert für die zweite Pulsweite, jedoch nicht beides.

Es ist jedoch auch möglich, dass für einzelne oder verschiedene Signalpulse kein Eintrag erzeugt wird.

Dass der Eintrag entweder der ersten oder der zweiten Pulsweite entspricht, kann derart verstanden werden, dass der Eintrag einen Wert enthält, der proportional oder äquivalent ist zu der ersten oder der zweiten Pulsweite. Dass die Punktwolke für den Signalpuls genau einen Eintrag enthält, ist insbesondere derart zu verstehen, dass die Punktwolke für denselben Signalpuls keinen weiteren Eintrag enthält. Selbstverständlich kann die Punktwolke aber für weitere Signalpulse, die zu demselben Sensorsignal oder zu einem anderen Sensorsignalen gehören, weitere Einträge enthalten.

Die Punktwolke kann von der Recheneinheit oder einer weiteren Recheneinheit zur Objekterkennung, also insbesondere zur Klassifizierung des Objekts, verwendet werden. Daher kann die Punktwolke als Punktwolke zur Objekterkennung bezeichnet werden.

Nach dem verbesserten Konzept werden also wie beschrieben, je nach Parameter des Signalpulses, verschiedene Pulsweiten beziehungsweise verschiedene Grenzwerte für die Signalamplitude verwendet. Dadurch wird zum einen vermieden, dass Signalpulse, die nicht Reflexionen von realen Objekten entsprechen sondern beispielsweise aufgrund von Rauschen zustande kommen, bei der weiteren Verarbeitung der Punktwolke berücksichtigt werden. Gleichzeitig wird es jedoch erreicht, dass möglichst wenige Signalpulse unberücksichtigt bleiben, die auf eine reale Reflexion von einem realen Objekt zurückgehen.

Mit anderen Worten wird dadurch zum einen der Einfluss von Rauscheffekten verringert, was einer höheren Zuverlässigkeit der Objekterkennung nach dem verbesserten Konzept entspricht, und zum anderen ist die Empfindlichkeit oder effektive Reichweite des Sensorsystems hoch.

Zudem wird durch das Verfahren nach dem verbesserten Konzept Speicherplatz zum Speichern der Punktwolke eingespart, da diese für jeden Signalpuls nur einen Eintrag enthält. Würde man beispielsweise zwei Punktwolken erzeugen, eine für den ersten Grenzwert und die entsprechende erste Pulsweite und eine für den zweiten Grenzwert und die entsprechende zweite Pulsweite, so wäre der Speicherbedarf signifikant höher. Dies gilt insbesondere auch, wenn die Einträge entsprechende Informationen bezüglich der zugeordneten Kategorie enthalten, wie beispielsweise ein Flag oder einen Identifikator.

Gemäß zumindest einer Ausführungsform des Verfahrens nach dem verbesserten Konzept wird mittels der Recheneinheit abhängig von dem Signalpuls ein radialer Abstand des Objekts von dem Sensorsystem bestimmt. Der Signalpuls wird mittels der Recheneinheit abhängig von dem radialen Abstand der einen von wenigstens zwei Kategorien zugeordnet.

Der radiale Abstand kann dabei beispielsweise durch eine Lichtlaufzeitmessung (englisch: "Time-of-Flight", ToF) bestimmt werden. Je länger die Zeitdauer zwischen Aussenden des emittierten Lichts und Detektieren des entsprechenden Signalpulses ist, desto größer ist die Lichtlaufzeit und desto größer ist auch der entsprechende radiale Abstand.

Der radiale Abstand eignet sich besonders gut als Parameter des Signalpulses zur Kategorisierung des Signalpulses, da es mit steigendem radialem Abstand immer unwahrscheinlicher wird, dass ein Signalpuls eine gewisse Amplitude überschreitet. Mit anderen Worten wird die Maximalamplitude der Signalpulse mit steigendem radialem Abstand immer kleiner. Deshalb macht es gegebenenfalls Sinn, bei großen radialen Abständen eher einen kleineren Grenzwert zur Bestimmung der Pulsweite zu verwenden und bei kleineren radialen Abständen einen größeren Grenzwert, insbesondere um den Einfluss von Rauschen zu reduzieren.

Insbesondere kann der Signalpuls einer ersten Kategorie der wenigstens zwei Kategorien zugeordnet werden, wenn der radiale Abstand größer ist als ein vorgegebener Grenzabstand. Andererseits kann der Signalpuls einer zweiten Kategorie oder einer dritten Kategorie der wenigstens zwei, gegebenenfalls wenigstens drei, Kategorien zugeordnet werden, wenn der radiale Abstand kleiner ist als der Grenzabstand.

Gemäß zumindest einer Ausführungsform ist der zweite Grenzwert größer als der erste Grenzwert.

Gemäß zumindest einer Ausführungsform wird der Signalpuls mittels der Recheneinheit der ersten Kategorie der wenigstens zwei Kategorien zugeordnet, wenn der radiale Abstand größer ist als der vordefinierte Grenzabstand. Die Punktwolke wird mittels der Recheneinheit mit dem Eintrag erzeugt, welcher der ersten Pulswolke entspricht, wenn der Signalpuls der ersten Kategorie zugeordnet wurde.

In solchen Ausführungsformen entspricht der radiale Abstand einem der Parameter für den Signalpuls.

Ist der radiale Abstand größer als der Grenzabstand, so kann mit hoher Wahrscheinlichkeit davon ausgegangen werden, dass der Signalpuls nicht aufgrund von Rauschen zustande gekommen ist. Dementsprechend ist es vorteilhaft, den niedrigeren ersten Grenzwert und dementsprechend die erste Pulsweite für die Erzeugung der Punktwolke zu berücksichtigen, um maximal weit entfernte Objekte in der Punktwolke darstellen zu können. Dementsprechend wird die Empfindlichkeit des optischen Sensorsystems dadurch erhöht.

Gemäß zumindest einer Ausführungsform wird der Signalpuls, insbesondere mittels der Recheneinheit, einer zweiten Kategorie der wenigstens zwei Kategorien zugeordnet, wenn der radiale Abstand kleiner ist als der Grenzabstand und die zweite Pulsweite größer als Null ist. Die Punktwolke wird mittels der Recheneinheit mit dem Eintrag erzeugt, welcher der zweiten Pulsweite entspricht, wenn der Signalpuls der zweiten Kategorie zugeordnet wurde.

In solchen Ausführungsformen entspricht auch die zweite Pulsweite einem der Parameter des Signalpulses.

Ist der radiale Abstand kleiner als der Grenzabstand, so kann mit hoher Wahrscheinlichkeit davon ausgegangen werden, dass Pulse, die auf Reflexionen von echten Objekten zurückgehen, Maximalamplituden liefern, die größer sind als der zweite Grenzwert. Mit anderen Worten kann davon ausgegangen werden, dass diejenigen Signalpulse, deren maximale Amplitude den zweiten Grenzwert nicht erreicht, für den die zweite Pulsweite also dementsprechend gleich Null ist, auf Rauscheffekte zurückgehen. Dementsprechend ist es vorteilhaft, für derart kleine radiale Abstände die zweite Pulsweite zur Erzeugung der Punktwolke heranzuziehen. Dadurch wird der Einfluss von Rauschen reduziert.

Gemäß zumindest einer Ausführungsform enthalten die wenigstens zwei Kategorien wenigstens drei Kategorien oder genau drei Kategorien. Insbesondere enthalten die wenigstens zwei Kategorien die erste Kategorie, die zweite Kategorie und eine dritte Kategorie. Der Signalpuls wird, insbesondere mittels der Recheneinheit, der dritten Kategorie der wenigstens drei Kategorien zugeordnet, wenn der radiale Abstand kleiner ist als der Grenzabstand und die zweite Pulsweite gleich Null ist. Die Punktwolke wird, insbesondere mittels der Recheneinheit, mit dem Eintrag erzeugt, welcher der ersten Pulsweite entspricht, wenn der Signalpuls der dritten Kategorie zugeordnet wurde.

In diesem Fall ist lediglich die erste Pulsweite relevant, da die zweite Pulsweite gleich Null ist. Dementsprechend wird der Eintrag mit der ersten Pulsweite erzeugt. Ist der radiale Abstand kleiner als der Grenzabstand und die zweite Pulsweite gleich Null, kann mit hoher Wahrscheinlichkeit davon ausgegangen werden, dass der entsprechende Signalpuls auf Signalrauschen oder sonstige Rauscheffekte zurückgeht.

Diese Information kann beispielsweise mittels eines Identifikators in der Punktwolke gespeichert werden, sodass Einträge von Signalpulsen der dritten Kategorie für bestimmte Folgeanwendungen nicht weiter berücksichtigt werden.

Gemäß zumindest einer Ausführungsform enthält der Eintrag einen Identifikator, der diejenige Kategorie anzeigt, welcher der Signalpuls zugeordnet wurde.

Der Identifikator kann also als Flag verstanden werden, der so viele verschiedene Werte annehmen kann, wie es verschiedene Kategorien für die Signalpulse gibt.

Folgeanwendungen, beispielsweise zur Objektklassifizierung oder dergleichen, können anhand des Identifikators bestimmen, welche Pulsweite der Eintrag jeweils betrifft und diese entsprechend individuell verwenden.

Das Speichern des Identifikators verursacht lediglich einen sehr geringen Speicheraufwand. Im Falle von zwei Kategorien ist lediglich ein Bit pro Eintrag erforderlich, im Falle von drei oder vier Kategorien sind lediglich zwei Bit pro Eintrag erforderlich. Dies führt insbesondere im Vergleich zur Speicherung zweier vollständiger Einträge, beispielsweise wenn zwei verschiedene Punktwolken gespeichert würden, zu einer signifikanten Einsparung von Speicherplatz.

Gemäß zumindest einer Ausführungsform wird das Objekt, insbesondere mittels der Recheneinheit, basierend auf der Punktwolke unter Berücksichtigung des Eintrags automatisch klassifiziert.

Die Klassifizierung erfolgt insbesondere basierend auf der ersten Pulsweite oder der zweiten Pulsweite, je nachdem, welcher der beiden Pulsweiten der Eintrag entspricht.

Gemäß zumindest einer Ausführungsform erfolgt die Klassifizierung abhängig von dem Identifikator des Eintrags.

Beispielsweise können Einträge, deren Identifikator auf die dritte Kategorie hinweist, nicht zur Klassifizierung verwendet werden. Da die Einträge zur dritten Kategorie, wie oben beschrieben, auf den Einfluss von Rauscheffekten hinweisen, kann der Einfluss von diesen auf die Klassifizierung dadurch reduziert werden, was zu einer zuverlässigeren oder genaueren Klassifizierung führen kann.

Gemäß zumindest einer Ausführungsform ist der zweite Grenzwert größer als der erste Grenzwert und der erste Grenzwert ist größer als ein vorgegebenes Rauschniveau der Detektoreinheit.

Dadurch kann mit Vorteil verhindert werden, dass Signalrauschen falsch interpretiert wird. Die Zuverlässigkeit des Verfahrens wird dadurch weiter erhöht.

Gemäß zumindest einer Ausführungsform beinhaltet das Verfahren das Bestimmen des vorgegebenen Rauschniveaus basierend auf Testmessungen.

Gemäß dem verbesserten Konzept wird auch ein Verfahren zur wenigstens teilweise automatischen Steuerung eines Kraftfahrzeugs angegeben. Eine Punktwolke zur Objekterkennung wird mittels eines Verfahrens zur Objekterkennung nach dem verbesserten Konzept erzeugt und das Kraftfahrzeug wird abhängig von der Punktwolke, insbesondere von einem Ergebnis der Klassifizierung des Objekts basierend auf der Punktwolke unter Berücksichtigung des Eintrags, wenigstens teilweise automatisch gesteuert.

Gemäß zumindest einer Ausführungsform ist der zweite Grenzwert größer als der erste Grenzwert und der zweite Grenzwert ist größer als ein vorgegebener Sättigungsgrenzwert der Detektoreinheit.

Der Sättigungsgrenzwert kann beispielsweise einem maximalen Detektorstrom entsprechen, sodass das Sensorsignal bei dem Sättigungsgrenzwert abgeschnitten wird, unabhängig von einer gegebenenfalls höheren Intensität des einfallenden Lichts.

Oberhalb des Sättigungsgrenzwerts ist daher eine Pulsweite nicht aussagekräftig beziehungsweise identisch Null.

Gemäß zumindest einer Ausführungsform wird der Sättigungsgrenzwert in dem Verfahren durch weitere Testmessungen vorab bestimmt.

Gemäß zumindest einer Ausführungsform des Verfahrens zur wenigstens teilweise automatischen Steuerung des Kraftfahrzeugs nach dem verbesserten Konzept beinhaltet das Erzeugen der Punktwolke zur Objekterkennung mittels eines Verfahrens zur Objekterkennung nach dem verbesserten Konzept das automatische Klassifizieren des Objekts basierend auf der Punktwolke unter Berücksichtigung des Eintrags. Das Kraftfahrzeug wird abhängig von einem Ergebnis der Klassifizierung wenigstens teilweise automatisch gesteuert.

Gemäß dem verbesserten Konzept wird auch ein aktives optisches Sensorsystem, insbesondere für ein Kraftfahrzeug, angegeben. Das Sensorsystem weist eine Detektoreinheit auf, die dazu eingerichtet ist, von einem Objekt in einer Umgebung des Sensorsystems reflektiertes Licht zu erfassen und basierend auf dem erfassten Licht ein Sensorsignal zu erzeugen. Das Sensorsystem weist eine Recheneinheit auf, die dazu eingerichtet ist, eine erste Pulsweite eines Signalpulses des Sensorsignals zu bestimmen, wobei die erste Pulsweite durch einen vorgegebenen ersten Grenzwert für eine Amplitude des Sensorsignals festgelegt ist. Die Recheneinheit ist dazu eingerichtet, eine zweite Pulsweite des Signalpulses zu bestimmen, wobei die zweite Pulsweite durch einen vorgegebenen zweiten Grenzwert für die Amplitude des Sensorsignals festgelegt ist. Die Recheneinheit ist dazu eingerichtet, den Signalpuls abhängig von wenigstens einem vordefinierten Parameter des Signalpulses einer von wenigstens zwei Kategorien zuzuordnen und eine Punktwolke zur Objekterkennung zu erzeugen. Die Punktwolke enthält für den Signalpuls genau einen Eintrag, wobei der Eintrag abhängig von der Kategorie des Signalpulses entweder der ersten Pulsweite oder der zweiten Pulsweite entspricht.

Insbesondere weist das aktive optische Sensorsystem eine Emittereinheit auf, die dazu eingerichtet ist, Licht in Richtung des Objekts zu emittieren und die Detektoreinheit ist dazu eingerichtet, von dem Objekt reflektierte Anteile des emittierten Lichts zu erfassen und basierend darauf das Sensorsignal zu erzeugen.

Weitere Ausführungsformen des aktiven optischen Sensorsystems nach dem verbesserten Konzept folgen direkt aus den verschiedenen Ausgestaltungsformen des Verfahrens zur Objekterkennung nach dem verbesserten Konzept und umgekehrt. Insbesondere kann ein aktives optisches Sensorsystem nach dem verbesserten Konzept dazu eingerichtet oder programmiert sein, ein Verfahren nach dem verbesserten Konzept durchzuführen oder es führt ein solches Verfahren durch.

Gemäß dem verbesserten Konzept wird auch ein elektronisches Fahrzeugführungssystem für ein Kraftfahrzeug angegeben. Das Fahrzeugführungssystem weist ein aktives optisches Sensorsystem nach dem verbesserten Konzept auf und das Fahrzeugführungssystem weist ein Steuergerät auf, das dazu eingerichtet ist, abhängig von der Punktwolke wenigstens ein Steuersignal zu erzeugen, um das Kraftfahrzeug wenigstens teilweise automatisch zu steuern.

Das Steuergerät kann dabei beispielsweise die Recheneinheit des aktiven optischen Sensorsystems beinhalten.

Gemäß dem verbesserten Konzept wird auch ein Kraftfahrzeug mit einem elektronischen Fahrzeugführungssystem nach dem verbesserten Konzept oder einem aktiven optischen Sensorsystem nach dem verbesserten Konzept angegeben.

Gemäß dem verbesserten Konzept wird ein erstes Computerprogramm mit ersten Befehlen angegeben. Bei Ausführung der ersten Befehle beziehungsweise des ersten Computerprogramms durch ein aktives optisches Sensorsystem nach dem verbesserten Konzept veranlassen die ersten Befehle das Sensorsystem dazu, ein Verfahren zur Objekterkennung nach dem verbesserten Konzept durchzuführen.

Gemäß dem verbesserten Konzept wird auch ein zweites Computerprogramm mit zweiten Befehlen angegeben. Bei Ausführung der zweiten Befehle durch ein elektronisches Fahrzeugführungssystem nach dem verbesserten Konzept beziehungsweise bei Ausführung des zweiten Computerprogramms durch das Fahrzeugführungssystem, veranlassen die zweiten Befehle das Fahrzeugführungssystem dazu, ein Verfahren zur wenigstens teilweise automatischen Steuerung eines Kraftfahrzeugs nach dem verbesserten Konzept durchzuführen.

Gemäß dem verbesserten Konzept wird auch ein computerlesbares Speichermedium angegeben, auf dem ein erstes Computerprogramm nach dem verbesserten Konzept und/oder ein zweites Computerprogramm nach dem verbesserten Konzept gespeichert ist.

Die Computerprogramme nach dem verbesserten Konzept sowie das computerlesbare Speichermedium können als jeweilige Computerprogrammprodukte mit den entsprechenden ersten und/oder zweiten Befehlen aufgefasst werden.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als erfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von denen abweichen.

In den Figuren zeigen:
- Fig. 1: eine schematische Darstellung eines Kraftfahrzeugs mit einer beispielhaften Ausführungsform eines elektronischen Fahrzeugführungssystems nach dem verbesserten Konzept;
- Fig. 2: eine schematische Darstellung von Sensorsignalen einer Detektoreinheit einer beispielhaften Ausführungsform eines aktiven optischen Sensorsystems nach dem verbesserten Konzept;
- Fig. 3: eine schematische Darstellung weiterer Sensorsignale einer Detektoreinheit einer weiteren beispielhaften Ausführungsform eines aktiven optischen Sensorsystems nach dem verbesserten Konzept;
- Fig. 4: eine schematische Darstellung weiterer Sensorsignale einer Detektoreinheit einer weiteren beispielhaften Ausführungsform eines aktiven optischen Sensorsystems nach dem verbesserten Konzept;
- Fig. 5: eine schematische Darstellung einer Kameraaufnahme und einer Punktwolke erzeugt durch eine weitere beispielhafte Ausführungsform eines aktiven optischen Sensorsystems nach dem verbesserten Konzept;
- Fig. 6: eine schematische Darstellung einer Kameraaufnahme und einer Punktwolke; und
- Fig. 7: eine schematische Darstellung einer Kameraaufnahme und einer Punktwolke.

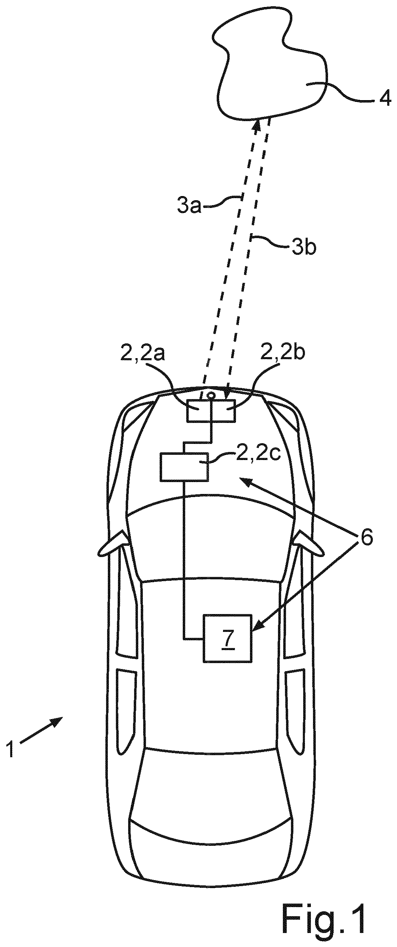

In der Fig. 1 ist schematisch ein Kraftfahrzeug 1 dargestellt, das eine beispielhafte Ausführungsform eines Fahrzeugführungssystems 6 nach dem verbesserten Konzept aufweist.

Das elektronische Fahrzeugführungssystem 6 weist insbesondere ein aktives optisches Sensorsystem 2 nach dem verbesserten Konzept auf. Optional kann das Fahrzeugführungssystem 6 auch ein Steuergerät 7 aufweisen.

Das aktive optische Sensorsystem 2 weist eine Emittereinheit 2a auf, die beispielsweise einen Infrarotlaser enthält. Des Weiteren weist das Sensorsystem 2 eine Detektoreinheit 2b auf, die beispielsweise einen oder mehrere optische Detektoren, wie zum Beispiel APDs, enthält.

Das Sensorsystem 2 weist außerdem eine Recheneinheit 2c auf. Im Folgenden beschriebene Funktionen der Recheneinheit 2c können in verschiedenen Ausgestaltungsformen auch von dem Steuergerät 7 übernommen werden oder umgekehrt.

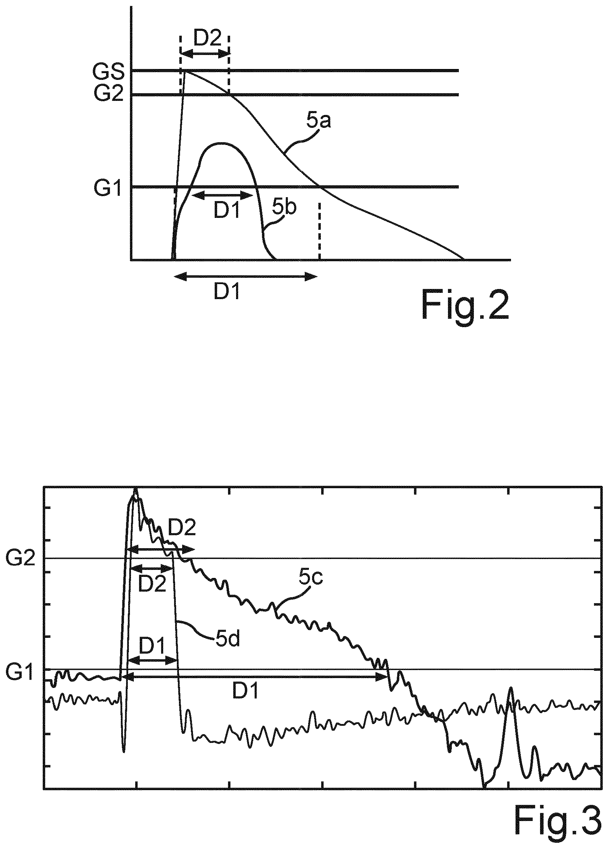

Die Emittereinheit 2a emittiert Laserpulse 3a in die Umgebung des Kraftfahrzeugs 1, wo sie von einem Objekt 4 teilweise reflektiert werden und als reflektierte Pulse 3b wenigstens zum Teil in Richtung des Sensorsystems 2 und insbesondere der Detektoreinheit 2b zurückreflektiert werden. Die Detektoreinheit 2b, insbesondere die optischen Detektoren der Detektoreinheit 2b, erfassen die reflektierten Anteile 3b und erzeugen basierend darauf ein zeitabhängiges Sensorsignal, das eine Amplitude aufweist, die proportional ist zur Strahlungsintensität oder Strahlungsleistung des erfassten Lichts 3b. In Fig. 2 und Fig. 3 sind entsprechende Beispiele für verschiedene Signalpulse dargestellt.

Die Recheneinheit 2c bestimmt ein erstes Zeitintervall, während dem das Sensorsignal 5a, 5b, 5c, 5d einen ersten Grenzwert G1 überschreitet. Dieses erste Zeitintervall entspricht dann der ersten Pulsweite D1 des entsprechenden Signalpulses. In derselben Weise bestimmt die Recheneinheit 2c eine zweite Pulsweite D2 durch entsprechenden Vergleich des Sensorsignals Sensorsignal 5a, 5b, 5c, 5d mit einem zweiten Grenzwert G2, der größer ist als der erste Grenzwert G1.

Die Recheneinheit 2c oder das Steuergerät 7 kann dann basierend auf der ersten Pulsweite D1 und der zweiten Pulsweite D2 eine Eigenschaft des Objekts 4 bestimmen, beispielsweise eine Reflektivität oder eine Ausdehnung des Objekts 4.

Insbesondere kann die Recheneinheit 2c oder das Steuergerät 7 das Objekt 4 abhängig von der Eigenschaft beziehungsweise von den Pulsweiten D1, D2 klassifizieren.

Basierend auf einem Ergebnis der Klassifizierung beziehungsweise basierend auf der Eigenschaft des Objekts erzeugt das Steuergerät 7 dann beispielsweise Steuersignale, um das Kraftfahrzeug 1 wenigstens teilweise automatisch zu steuern.

In Fig. 2 sind zwei beispielhafte Sensorsignale 5a, 5b gezeigt. Während der Signalpuls das Sensorsignals 5a einen Sättigungsgrenzwert GS erreicht, seine Amplitude also insbesondere den zweiten Grenzwert G2 überschreitet, gilt dies nicht für den Signalpuls des Sensorsignals 5b. Beide Sensorsignale überschreiten aber den ersten Grenzwert G1. Demzufolge ist die erste Pulsweite D1 für beide Sensorsignale 5a, 5b größer als Null. Die zweite Pulsweite D2 ist dagegen nur für das Sensorsignal 5a größer als Null und für das Sensorsignal 5b gleich Null.

Verwendet man beispielsweise APDs als optische Detektoren, kann der Sättigungsgrenzwert GS beispielsweise in der Größenordnung einiger 100 mV liegen, beispielsweise zwischen 100 mV und 1000 mV.

In Fig. 3 ist ein weiteres Beispiel zweier weiterer Sensorsignale 5c, 5d gezeigt. Hier ist sowohl die erste Pulsweite D1 als auch die zweite Pulsweite D2 für beide Sensorsignale 5c, 5d größer als Null.

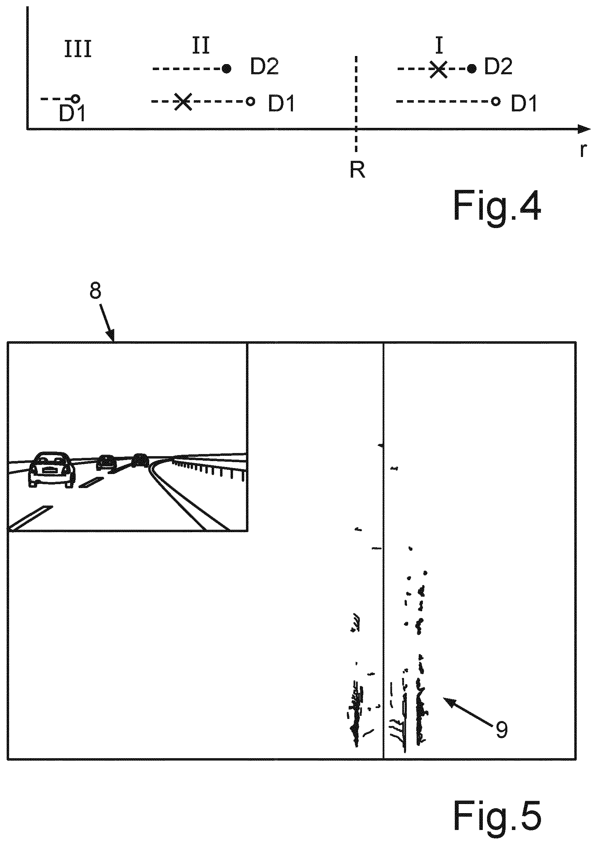

Die Recheneinheit 2c erzeugt eine Punktwolke basierend auf den Signalpulsen, insbesondere jeweils basierend entweder auf der ersten Pulsweite D1 oder der zweiten Pulsweite D2. Dazu werden die Signalpulse einer von drei Kategorien I, II, III zugeordnet wie es in Fig. 4 schematisch dargestellt ist.

Ist der radiale Abstand r, der für den Signalpuls basierend auf der Lichtlaufzeitmessung bestimmt wurde, größer als ein vordefinierter Grenzabstand R, so ist es unwahrscheinlich, dass ein Objekt 4 in der Umgebung des Kraftfahrzeugs 1 Licht mit ausreichend hoher Intensität reflektiert, dass der zweite Grenzwert G2 überschritten wird und dementsprechend die zweite Pulsweite D2 größer als Null ist. Dementsprechend wird der Signalpuls in diesem Fall einer ersten Kategorie I zugeordnet. Für Signalpulse der Kategorie I wird der entsprechende Eintrag für den Signalpuls derart erzeugt, dass er die erste Pulsweite D1 wiedergibt.

Ist der radiale Abstand r jedoch kleiner als der Grenzabstand R, so kann davon ausgegangen werden, dass Pulse, die den zweiten Grenzwert G2 nicht erreichen, auf Rauscheffekte zurückgehen oder aus sonstigen Gründen nicht zuverlässig sind.

Dementsprechend werden Signalpulse, für die der bestimmte radiale Abstand kleiner ist als der Grenzabstand R und deren zweite Pulsweite D2 größer ist als Null, einer zweiten Kategorie II zugeordnet und diejenigen Signalpulse, für die der radiale Abstand r kleiner ist als der Grenzabstand R und für die die zweite Pulsweite D2 gleich Null ist, werden einer dritten Kategorie III zugeordnet.

Für Signalpulse der Kategorie II betrifft der Eintrag der Punktwolke die zweite Pulsweite D2 und für Signalpulse der Kategorie III betrifft der Eintrag die erste Pulsweite D1.

In Fig. 5 ist schematisch eine Punktwolke 9 dargestellt, die basierend auf dem verbesserten Konzept wie beschrieben erzeugt wurde. In der Punktwolke 9 sind nur diejenigen Punkte dargestellt, die der Kategorie I oder der Kategorie II entsprechen. Signalpulse der Kategorie III sind nicht dargestellt. Dies wird möglich, indem jedem Eintrag ein Identifikator oder Flag zugeordnet wird beziehungsweise für jeden Eintrag ein solcher Identifikator gespeichert wird, der die entsprechende Kategorie I, II, III anzeigt.

In dieser Weise können die Punkte der Kategorie III ausgeblendet werden, da diese mit hoher Wahrscheinlichkeit auf Rauscheffekte zurückgehen.

Indem jedoch Signalpulse mit einem radialen Abstand r größer als dem Grenzabstand R mit der zweiten Pulsweite D2 berücksichtigt wurden, sind auch für relativ große Abstände von dem Sensorsystem Punkte in der Punktwolke 9 dargestellt.

Schematisch ist in Fig. 5 auch ein entsprechendes Kamerabild 8 dargestellt.

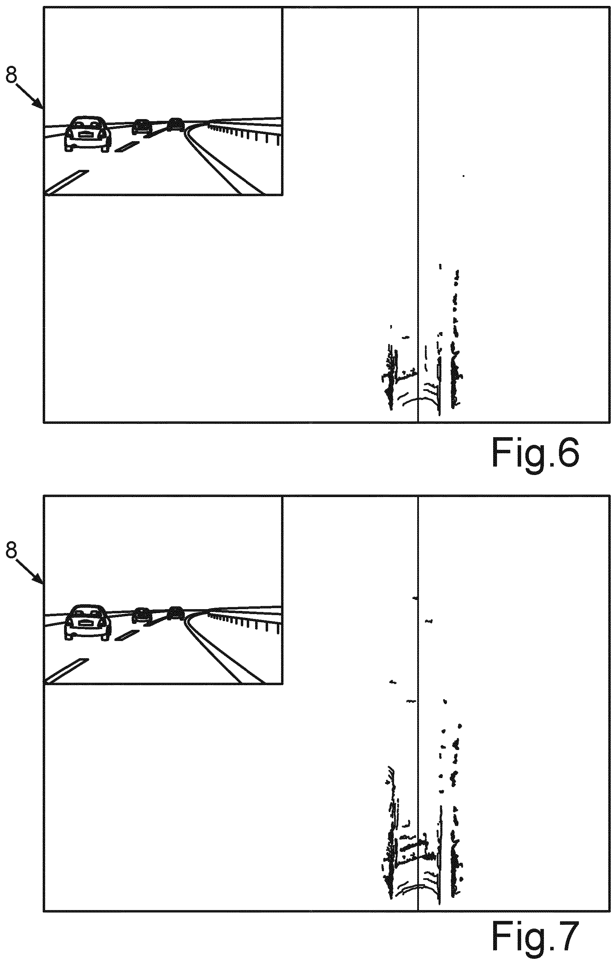

In Fig. 6 ist schematisch eine weitere Punktwolke dargestellt. In der Punktwolke der Fig. 6 wurden dieselben Signalpulse zugrunde gelegt, wie sie für die Erzeugung der Punktwolke 9 aus Fig. 5 zugrunde gelegt wurden. Für die Fig. 6 wurde jedoch für jeden Eintrag die zweite Pulsweite D2 verwendet. Wie durch einen Vergleich von Fig. 5 und Fig. 6 erkennbar ist, ist die effektive Reichweite in der Punktwolke der Fig. 6 geringer als für die Punktwolke 9 der Fig. 5.

In Fig. 7 ist eine weitere Punktwolke gezeigt, der wiederum dieselben Signalpulse zugrunde gelegt wurden. Für Fig. 7 wurde jedoch für alle Signalpulse die erste Pulsweite D1 verwendet. Entsprechend ist erkennbar, dass die Reichweite vergleichbar ist mit derjenigen, die durch die Punktwolke 9 der Fig. 5 gegeben ist. Im Nahbereich enthält die Punktwolke der Fig. 7 jedoch zusätzliche Punkte, die mit hoher Wahrscheinlichkeit auf Rauschen zurückgehen.

Durch das verbesserte Konzept wird es, wie beschrieben, ermöglicht, eine Punktwolke zur Objekterkennung oder Objektklassifizierung anzugeben, die einerseits einen geringeren Einfluss von Rauschen aufweist und andererseits eine hohe Empfindlichkeit des Sensorsystems widerspiegelt. Zudem wird durch das verbesserte Konzept Speicherplatz eingespart, insbesondere im Vergleich zur Speicherung zweier voller Punktwolken.

In verschiedenen Ausgestaltungsformen des verbesserten Konzepts wird also eine Hybridpunktwolke erzeugt, um die analogen Signalpulse in die diskrete Domäne zu überführen. Beispielsweise kann jedem Punkt ein Flag zugeordnet werden, je nachdem, wie groß der radiale Abstand von dem Sensorsystem ist und wie hoch die maximale Amplitude des Signalpulses ist. In dieser Weise können Punkte, deren radialer Abstand klein ist und deren maximale Amplitude ebenfalls klein ist, ausgeblendet werden, da diese auf Störungen oder Rauschen zurückgehen.

## Patentansprüche

1. Verfahren zur Objekterkennung durch ein aktives optisches Sensorsystem (2), wobei
- mittels einer Detektoreinheit (2b) des Sensorsystems (2) von einem Objekt (4) in einer Umgebung des Sensorsystems (2) reflektiertes Licht (3b) erfasst wird und basierend auf dem erfassten Licht (3b) ein Sensorsignal (5a, 5b, 5c, 5d, 5e, 5f) erzeugt wird;
- mittels einer Recheneinheit (2c) eine erste Pulsweite (D1) eines Signalpulses des Sensorsignals (5a, 5b, 5c, 5d, 5e, 5f) bestimmt wird, wobei die erste Pulsweite (D1) durch einen vorgegebenen ersten Grenzwert (G1) für eine Amplitude des Sensorsignals (5a, 5b, 5c, 5d, 5e, 5f) festgelegt ist;
wobei mittels der Recheneinheit (2c)
- eine zweite Pulsweite (D2) des Signalpulses bestimmt wird, wobei die zweite Pulsweite (D2) durch einen vorgegebenen zweiten Grenzwert (G2) für die Amplitude des Sensorsignals (5a, 5b, 5c, 5d, 5e, 5f) festgelegt ist;
- der Signalpuls abhängig von wenigstens einem vordefinierten Parameter des Signalpulses einer von wenigstens zwei Kategorien zugeordnet wird;
- eine Punktwolke (9) zur Objekterkennung zu erzeugen, die für Signalpulse verschiedene Einträge enthalten kann, wobei die Punktwolke für denselben Signalpuls genau einen Eintrag enthält und der Eintrag abhängig von der Kategorie des Signalpulses entweder der ersten Pulsweite (D1) oder der zweiten Pulsweite (D2) entspricht
wobei mittels der Recheneinheit (2c) abhängig von dem Signalpuls ein radialer Abstand des Objekts (4) von dem Sensorsystem (2) bestimmt wird; und
- der Signalpuls abhängig von dem radialen Abstand der einen von wenigstens zwei Kategorien zugeordnet wird,
- wobei der zweite Grenzwert (G2) größer ist als der erste Grenzwert (G1);
- wobei der Signalpuls einer ersten Kategorie der wenigstens zwei Kategorien zugeordnet wird, wenn der radiale Abstand größer ist, als ein vordefinierter Grenzabstand (R); und
- die Punktwolke (9) mit dem Eintrag erzeugt wird, welcher der ersten Pulsweite (D1) entspricht, wenn der Signalpuls der ersten Kategorie zugeordnet wurde,
- und wobei der Signalpuls einer zweiten Kategorie der wenigstens zwei Kategorien zugeordnet wird, wenn der radiale Abstand kleiner ist als der Grenzabstand (R) und die zweite Pulsweite (D2) größer als Null ist; und
- die Punktwolke (9) mit dem Eintrag erzeugt wird, welcher der zweiten Pulsweite (D2) entspricht, wenn der Signalpuls der zweiten Kategorie zugeordnet wurde.

2. Verfahren nach Anspruch 1,
**dadurch gekennzeichnet, dass**
- die wenigstens zwei Kategorien wenigstens drei Kategorien beinhalten;
- der Signalpuls einer dritten Kategorie der wenigstens drei Kategorien zugeordnet wird, wenn der radiale Abstand kleiner ist als der Grenzabstand (R) und die zweite Pulsweite (D2) gleich Null ist; und
- die Punktwolke (9) mit dem Eintrag erzeugt wird, welcher der ersten Pulsweite (D1) entspricht, wenn der Signalpuls der dritten Kategorie zugeordnet wurde.

3. Verfahren nach einem der vorhergehenden Ansprüche,
**dadurch gekennzeichnet, dass**
der Eintrag einen Identifikator enthält, der diejenige Kategorie anzeigt, welcher der Signalpuls zugeordnet wurde.

4. Verfahren nach einem der vorhergehenden Ansprüche,
**dadurch gekennzeichnet, dass**
das Objekt (4) basierend auf der Punktwolke (9) unter Berücksichtigung des Eintrags automatisch klassifiziert wird.

5. Verfahren nach einem der vorhergehende Ansprüche,
**dadurch gekennzeichnet, dass**
- der zweite Grenzwert (G2) größer ist als der erste Grenzwert (G1) und der erste Grenzwert (G1) größer ist als ein vorgegebenes Rauschniveau der Detektoreinheit (2b); und/oder
- der zweite Grenzwert (G2) größer ist als der erste Grenzwert (G1) und der zweite Grenzwert (G2) größer ist als ein vorgegebener Sättigungsgrenzwert (GS) der Detektoreinheit.

6. Verfahren zur wenigstens teilweise automatischen Steuerung eines Kraftfahrzeugs (1),
**dadurch gekennzeichnet, dass**
- eine Punktwolke (9) zur Objekterkennung mittels eines Verfahrens nach einem der vorhergehenden Ansprüche erzeugt wird; und
- das Kraftfahrzeug (1) abhängig von der Punktwolke (9) wenigstens teilweise automatisch gesteuert wird.

7. Verfahren nach Anspruch 6,
**dadurch gekennzeichnet, dass**
- die Punktwolke (9) mittels eines Verfahrens nach Anspruch 4 erzeugt wird; und
- das Kraftfahrzeug (1) abhängig von einem Ergebnis der Klassifizierung wenigstens teilweise automatisch gesteuert wird.

8. Aktives optisches Sensorsystem (2), aufweisend
- eine Detektoreinheit (2b), die dazu eingerichtet ist, von einem Objekt (4) in einer Umgebung des Sensorsystems (2) reflektiertes Licht (3b) zu erfassen und basierend auf dem erfassten Licht (3b) ein Sensorsignal (5a, 5b, 5c, 5d, 5e, 5f) zu erzeugen;
- eine Recheneinheit (2c), die dazu eingerichtet ist, eine erste Pulsweite (D1) eines Signalpulses des Sensorsignals (5a, 5b, 5c, 5d, 5e, 5f) zu bestimmen, wobei die erste Pulsweite (D1) durch einen vorgegebenen ersten Grenzwert (G1) für eine Amplitude des Sensorsignals (5a, 5b, 5c, 5d, 5e, 5f) festgelegt ist;
die Recheneinheit (2c) dazu eingerichtet ist
- eine zweite Pulsweite (D2) des Signalpulses zu bestimmen, wobei die zweite Pulsweite (D2) durch einen vorgegebenen zweiten Grenzwert (G2) für die Amplitude des Sensorsignals (5a, 5b, 5c, 5d, 5e, 5f) festgelegt ist;
- den Signalpuls abhängig von wenigstens einem vordefinierten Parameter des Signalpulses einer von wenigstens zwei Kategorien zuzuordnen;
- eine Punktwolke (9) zur Objekterkennung zu erzeugen, die für Signalpulse verschiedene Einträge enthalten kann, wobei die Punktwolke für denselben Signalpuls genau einen Eintrag enthält und der Eintrag abhängig von der Kategorie des Signalpulses entweder der ersten Pulsweite (D1) oder der zweiten Pulsweite (D2) entspricht
wobei die Recheneinheit (2c) dazu eingerichtet ist, abhängig von dem Signalpuls einen radialen Abstand des Objekts (4) von dem Sensorsystem (2) zu bestimmen; und
- den Signalpuls abhängig von dem radialen Abstand der einen von wenigstens zwei Kategorien zuzuordnen,
- wobei der zweite Grenzwert (G2) größer ist als der erste Grenzwert (G1);
- wobei die Recheneinheit (2c) dazu eingerichtet ist, den Signalpuls einer ersten Kategorie der wenigstens zwei Kategorien zuzuordnen wird, wenn der radiale Abstand größer ist, als ein vordefinierter Grenzabstand (R); und
- die Punktwolke (9) mit dem Eintrag zu erzeugen, welcher der ersten Pulsweite (D1) entspricht, wenn der Signalpuls der ersten Kategorie zugeordnet wurde,
- den der Signalpuls einer zweiten Kategorie der wenigstens zwei Kategorien zuzuordnen wird, wenn der radiale Abstand kleiner ist als der Grenzabstand (R) und die zweite Pulsweite (D2) größer als Null ist; und
- die Punktwolke (9) mit dem zu Eintrag erzeugen, welcher der zweiten Pulsweite (D2) entspricht, wenn der Signalpuls der zweiten Kategorie zugeordnet wurde.

9. Elektronisches Fahrzeugführungssystem für ein Kraftfahrzeug (1),
**dadurch gekennzeichnet, dass**
- das Fahrzeugführungssystem (6) ein aktives optisches Sensorsystem (2) nach Anspruch 8 aufweist; und
- das Fahrzeugführungssystem (6) ein Steuergerät (7) aufweist, das dazu eingerichtet ist, abhängig von der Punktwolke (9) wenigstens ein Steuersignal zu erzeugen, um das Kraftfahrzeug (1) wenigstens teilweise automatisch zu steuern.

10. Computerprogramm mit Befehlen, die bei Ausführung durch ein aktives optisches Sensorsystem (2) nach Anspruch 8, das Sensorsystem (2) dazu veranlassen, ein Verfahren nach einem der Ansprüche 1 bis 5 durchzuführen.

11. Computerprogramm mit Befehlen, die bei Ausführung durch ein elektronisches Fahrzeugführungssystem (6) nach Anspruch 9, das Fahrzeugführungssystem (6) dazu veranlassen, ein Verfahren nach einem der Ansprüche 6 oder 7 durchzuführen.

12. Computerlesbares Speichermedium, welches ein Computerprogramm nach einem der Ansprüche 10 oder 11 speichert.

## Claims

1. Method for object detection by an active optical sensor system (2), wherein
- by means of a detector unit (2b) of the sensor system (2), light (3b) reflected from an object (4) in an environment of the sensor system (2) is captured and a sensor signal (5a, 5b, 5c, 5d, 5e, 5f) is generated based on the captured light (3b);
- by means of a computing unit (2c), a first pulse width (D1) of a signal pulse of the sensor signal (5a, 5b, 5c, 5d, 5e, 5f) is determined, wherein the first pulse width (D1) is defined by a predetermined first threshold value (G1) for an amplitude of the sensor signal (5a, 5b, 5c, 5d, 5e, 5f);
wherein by means of the computing unit (2c)
- a second pulse width (D2) of the signal pulse is determined, wherein the second pulse width (D2) is defined by a predetermined second threshold value (G2) for the amplitude of the sensor signal (5a, 5b, 5c, 5d, 5e, 5f);
- the signal pulse is assigned to one of at least two categories depending on at least one predefined parameter of the signal pulse;
- a point cloud (9) is generated for object detection, which can contain different entries for signal pulses, wherein the point cloud contains exactly one entry for the same signal pulse and the entry corresponds to either the first pulse width (D1) or the second pulse width (D2) depending on the category of the signal pulse
wherein by means of the computing unit (2c), a radial distance of the object (4) from the sensor system (2) is determined depending on the signal pulse; and
the signal pulse is assigned to one of at least two categories depending on the radial distance,
wherein the second threshold value (G2) is greater than the first threshold value (G1);
wherein the signal pulse is assigned to a first category of the at least two categories if the radial distance is greater than a predefined boundary distance (R); and
the point cloud (9) is generated with the entry corresponding to the first pulse width (D1) if the signal pulse was assigned to the first category,
and wherein the signal pulse is assigned to a second category of the at least two categories if the radial distance is less than the boundary distance (R) and the second pulse width (D2) is greater than zero; and
the point cloud (9) is generated with the entry corresponding to the second pulse width (D2) if the signal pulse was assigned to the second category.

2. Method according to claim 1, **characterized in that**
- the at least two categories include at least three categories;
- the signal pulse is assigned to a third category of the at least three categories if the radial distance is less than the boundary distance (R) and the second pulse width (D2) is equal to zero; and
- the point cloud (9) is generated with the entry corresponding to the first pulse width (D1) if the signal pulse was assigned to the third category.

3. Method according to any one of the preceding claims, **characterized in that**
- the entry contains an identifier indicating the category to which the signal pulse was assigned.

4. Method according to any one of the preceding claims, **characterized in that**
- the object (4) is automatically classified based on the point cloud (9) taking into account the entry.

5. Method according to any one of the preceding claims, **characterized in that**
- the second threshold value (G2) is greater than the first threshold value (G1) and the first threshold value (G1) is greater than a predetermined noise level of the detector unit (2b); and/or
- the second threshold value (G2) is greater than the first threshold value (G1) and the second threshold value (G2) is greater than a predetermined saturation threshold value (GS) of the detector unit.

6. Method for at least partially automatic control of a motor vehicle (1), **characterized in that**
- a point cloud (9) for object detection is generated by means of a method according to any one of the preceding claims; and
the motor vehicle (1) is at least partially automatically controlled depending on the point cloud (9).

7. Method according to claim 6, **characterized in that**
- the point cloud (9) is generated by means of a method according to claim 4; and
the motor vehicle (1) is at least partially automatically controlled depending on a result of the classification.

8. Active optical sensor system (2), comprising
- a detector unit (2b) configured to capture light (3b) reflected from an object (4) in an environment of the sensor system (2) and to generate a sensor signal (5a, 5b, 5c, 5d, 5e, 5f) based on the captured light (3b);
a computing unit (2c) configured to determine a first pulse width (D1) of a signal pulse of the sensor signal (5a, 5b, 5c, 5d, 5e, 5f), wherein the first pulse width (D1) is defined by a predetermined first threshold value (G1) for an amplitude of the sensor signal (5a, 5b, 5c, 5d, 5e, 5f);
the computing unit (2c) is configured to
determine a second pulse width (D2) of the signal pulse, wherein the second pulse width (D2) is defined by a predetermined second threshold value (G2) for the amplitude of the sensor signal (5a, 5b, 5c, 5d, 5e, 5f);
assign the signal pulse to one of at least two categories depending on at least one predefined parameter of the signal pulse;
generate a point cloud (9) for object detection, which can contain different entries for signal pulses, wherein the point cloud contains exactly one entry for the same signal pulse and the entry corresponds to either the first pulse width (D1) or the second pulse width (D2) depending on the category of the signal pulse
wherein the computing unit (2c) is configured to determine a radial distance of the object (4) from the sensor system (2) depending on the signal pulse; and
assign the signal pulse to one of at least two categories depending on the radial distance,
wherein the second threshold value (G2) is greater than the first threshold value (G1);
wherein the computing unit (2c) is configured to assign the signal pulse to a first category of the at least two categories if the radial distance is greater than a predefined boundary distance (R); and
generate the point cloud (9) with the entry corresponding to the first pulse width (D1) if the signal pulse was assigned to the first category,
assign the signal pulse to a second category of the at least two categories if the radial distance is less than the boundary distance (R) and the second pulse width (D2) is greater than zero; and
generate the point cloud (9) with the entry corresponding to the second pulse width (D2) if the signal pulse was assigned to the second category.

9. Electronic vehicle guidance system for a motor vehicle (1), **characterized in that**
the vehicle guidance system (6) comprises an active optical sensor system (2) according to claim 8; and
the vehicle guidance system (6) comprises a control unit (7) configured to generate at least one control signal depending on the point cloud (9) to at least partially automatically control the motor vehicle (1).

10. Computer program with instructions which, when executed by an active optical sensor system (2) according to claim 8, cause the sensor system (2) to perform a method according to any one of claims 1 to 5.

11. Computer program with instructions which, when executed by an electronic vehicle guidance system (6) according to claim 9, cause the vehicle guidance system (6) to perform a method according to any one of claims 6 or 7.

12. Computer-readable storage medium storing a computer program according to any one of claims 10 or 11.

## Revendications

1. Procédé de détection d'objet par un système de capteur optique actif (2), dans lequel
- au moyen d'une unité de détecteur (2b) du système de capteur (2), la lumière (3b) réfléchie par un objet (4) dans un environnement du système de capteur (2) est captée et un signal de capteur (5a, 5b, 5c, 5d, 5e, 5f) est généré sur la base de la lumière captée (3b) ;
- au moyen d'une unité de calcul (2c), une première largeur d'impulsion (D1) d'une impulsion de signal du signal de capteur (5a, 5b, 5c, 5d, 5e, 5f) est déterminée, la première largeur d'impulsion (D1) étant définie par une première valeur seuil prédéfinie (G1) pour une amplitude du signal de capteur (5a, 5b, 5c, 5d, 5e, 5f) ;
dans lequel, au moyen de l'unité de calcul (2c)
- une deuxième largeur d'impulsion (D2) de l'impulsion de signal est déterminée, la deuxième largeur d'impulsion (D2) étant définie par une deuxième valeur seuil prédéfinie (G2) pour l'amplitude du signal de capteur (5a, 5b, 5c, 5d, 5e, 5f) ;
- l'impulsion de signal est attribuée à l'une d'au moins deux catégories en fonction d'au moins un paramètre prédéfini de l'impulsion de signal ;
- un nuage de points (9) est généré pour la détection d'objet, qui peut contenir différentes entrées pour les impulsions de signal, le nuage de points contenant exactement une entrée pour la même impulsion de signal et l'entrée correspondant soit à la première largeur d'impulsion (D1) soit à la deuxième largeur d'impulsion (D2) en fonction de la catégorie de l'impulsion de signal
dans lequel, au moyen de l'unité de calcul (2c), une distance radiale de l'objet (4) par rapport au système de capteur (2) est déterminée en fonction de l'impulsion de signal ; et
l'impulsion de signal est attribuée à l'une d'au moins deux catégories en fonction de la distance radiale,
dans lequel la deuxième valeur seuil (G2) est supérieure à la première valeur seuil (G1) ;
dans lequel l'impulsion de signal est attribuée à une première catégorie des au moins deux catégories si la distance radiale est supérieure à une distance seuil prédéfinie (R) ; et
le nuage de points (9) est généré avec l'entrée qui correspond à la première largeur d'impulsion (D1) si l'impulsion de signal a été attribuée à la première catégorie,
et dans lequel l'impulsion de signal est attribuée à une deuxième catégorie des au moins deux catégories si la distance radiale est inférieure à la distance seuil (R) et que la deuxième largeur d'impulsion (D2) est supérieure à zéro ; et
le nuage de points (9) est généré avec l'entrée qui correspond à la deuxième largeur d'impulsion (D2) si l'impulsion de signal a été attribuée à la deuxième catégorie.

2. Procédé selon la revendication 1, **caractérisé en ce que**
- les au moins deux catégories comprennent au moins trois catégories ;
- l'impulsion de signal est attribuée à une troisième catégorie des au moins trois catégories si la distance radiale est inférieure à la distance seuil (R) et que la deuxième largeur d'impulsion (D2) est égale à zéro ; et
- le nuage de points (9) est généré avec l'entrée qui correspond à la première largeur d'impulsion (D1) si l'impulsion de signal a été attribuée à la troisième catégorie.

3. Procédé selon l'une des revendications précédentes, **caractérisé en ce que**
- l'entrée contient un identifiant qui indique la catégorie à laquelle l'impulsion de signal a été attribuée.

4. Procédé selon l'une des revendications précédentes, **caractérisé en ce que**
- l'objet (4) est automatiquement classifié sur la base du nuage de points (9) en tenant compte de l'entrée.

5. Procédé selon l'une des revendications précédentes, **caractérisé en ce que**
- la deuxième valeur seuil (G2) est supérieure à la première valeur seuil (G1) et la première valeur seuil (G1) est supérieure à un niveau de bruit prédéfini de l'unité de détecteur (2b) ; et/ou
- la deuxième valeur seuil (G2) est supérieure à la première valeur seuil (G1) et la deuxième valeur seuil (G2) est supérieure à une valeur seuil de saturation prédéfinie (GS) de l'unité de détecteur.

6. Procédé de commande au moins partiellement automatique d'un véhicule automobile (1), **caractérisé en ce que**
- un nuage de points (9) pour la détection d'objet est généré au moyen d'un procédé selon l'une des revendications précédentes ; et
le véhicule automobile (1) est commandé au moins partiellement automatiquement en fonction du nuage de points (9).

7. Procédé selon la revendication 6, **caractérisé en ce que**
- le nuage de points (9) est généré au moyen d'un procédé selon la revendication 4 ; et
le véhicule automobile (1) est commandé au moins partiellement automatiquement en fonction d'un résultat de la classification.

8. Système de capteur optique actif (2), comprenant
- une unité de détecteur (2b) qui est configurée pour capter la lumière (3b) réfléchie par un objet (4) dans un environnement du système de capteur (2) et pour générer un signal de capteur (5a, 5b, 5c, 5d, 5e, 5f) sur la base de la lumière captée (3b) ;
une unité de calcul (2c) qui est configurée pour déterminer une première largeur d'impulsion (D1) d'une impulsion de signal du signal de capteur (5a, 5b, 5c, 5d, 5e, 5f), la première largeur d'impulsion (D1) étant définie par une première valeur seuil prédéfinie (G1) pour une amplitude du signal de capteur (5a, 5b, 5c, 5d, 5e, 5f) ;
l'unité de calcul (2c) est configurée pour
déterminer une deuxième largeur d'impulsion (D2) de l'impulsion de signal, la deuxième largeur d'impulsion (D2) étant définie par une deuxième valeur seuil prédéfinie (G2) pour l'amplitude du signal de capteur (5a, 5b, 5c, 5d, 5e, 5f) ;
attribuer l'impulsion de signal à l'une d'au moins deux catégories en fonction d'au moins un paramètre prédéfini de l'impulsion de signal ;
générer un nuage de points (9) pour la détection d'objet, qui peut contenir différentes entrées pour les impulsions de signal, le nuage de points contenant exactement une entrée pour la même impulsion de signal et l'entrée correspondant soit à la première largeur d'impulsion (D1) soit à la deuxième largeur d'impulsion (D2) en fonction de la catégorie de l'impulsion de signal
dans lequel l'unité de calcul (2c) est configurée pour déterminer une distance radiale de l'objet (4) par rapport au système de capteur (2) en fonction de l'impulsion de signal ; et
attribuer l'impulsion de signal à l'une d'au moins deux catégories en fonction de la distance radiale,
dans lequel la deuxième valeur seuil (G2) est supérieure à la première valeur seuil (G1) ;
dans lequel l'unité de calcul (2c) est configurée pour attribuer l'impulsion de signal à une première catégorie des au moins deux catégories si la distance radiale est supérieure à une distance seuil prédéfinie (R) ; et
générer le nuage de points (9) avec l'entrée qui correspond à la première largeur d'impulsion (D1) si l'impulsion de signal a été attribuée à la première catégorie,
attribuer l'impulsion de signal à une deuxième catégorie des au moins deux catégories si la distance radiale est inférieure à la distance seuil (R) et que la deuxième largeur d'impulsion (D2) est supérieure à zéro ; et
générer le nuage de points (9) avec l'entrée qui correspond à la deuxième largeur d'impulsion (D2) si l'impulsion de signal a été attribuée à la deuxième catégorie.

9. Système électronique de conduite de véhicule pour un véhicule automobile (1), **caractérisé en ce que**
le système de conduite de véhicule (6) comprend un système de capteur optique actif (2) selon la revendication 8 ; et
le système de conduite de véhicule (6) comprend un dispositif de commande (7) qui est configuré pour générer au moins un signal de commande en fonction du nuage de points (9) afin de commander au moins partiellement automatiquement le véhicule automobile (1).

10. Programme informatique avec des instructions qui, lorsqu'elles sont exécutées par un système de capteur optique actif (2) selon la revendication 8, amènent le système de capteur (2) à exécuter un procédé selon l'une des revendications 1 à 5.

11. Programme informatique avec des instructions qui, lorsqu'elles sont exécutées par un système électronique de conduite de véhicule (6) selon la revendication 9, amènent le système de conduite de véhicule (6) à exécuter un procédé selon l'une des revendications 6 ou 7.

12. Support de stockage lisible par ordinateur qui stocke un programme informatique selon l'une des revendications 10 ou 11.
